**Europäisches Patentamt**

**European Patent Office**

**Office européen des brevets**

(19)

(11) Veröffentlichungsnummer: **0 089 656**
**B1**

(12) # EUROPÄISCHE PATENTSCHRIFT

(45) Veröffentlichungstag der Patentschrift:
**07.01.88**

(21) Anmeldenummer: **83102739.6**

(22) Anmeldetag: **19.03.83**

(51) Int. Cl.⁴: **E 02 D  5/74,** E 21 D  21/00

(54) **In vorgebohrte Löcher einzusetzender Injektionsanker.**

(30) Priorität: **24.03.82 DE 3210766**

(43) Veröffentlichungstag der Anmeldung:
**28.09.83 Patentblatt 83/39**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**BE - A - 829 104**
**DE - A - 2 019 533**
**DE - A - 2 926 155**
**FR - A - 2 297 288**
**NL - A - 7 300 463**

(73) Patentinhaber: **International INTEC Company
Establishment, Rheinbergerstrasse 6, FL-9490 Vaduz
(LI)**

(72) Erfinder: **Harke, Alfons, Bieregemstraat 27,
B-1790 Hekelgem (BE)**

(74) Vertreter: **Peerbooms, Rudolf, Dipl.-Phys.,
Postfach 200 208 Dickmannstrasse 45C,
D-5600 Wuppertal 2 (DE)**

## Beschreibung

Die Erfindung betrifft einen in vorgebohrte Löcher einzusetzenden Injektionsanker mit einem zentralen Schaft, der von einem rohrförmigen Mantel umschlossen ist, welcher an einem Ende mit einem Schaft verbunden ist.

Injektionsanker werden zur Befestigung von vorgesetzten Fassaden und Bauwerkteilen an unsicheren Untergründen wie Hohlkammer- und Leichtbausteinen und zur Sanierung von Bau- und Bergschäden an Gebäuden eingesetzt. Ein weiteres Anwendungsgebiet ist die Verfestigung schadhafter, gerissener oder sonstiger funktionsuntüchtiger Mauerwerks- oder Betonteile im Hochbau, Brückenbau und Tiefbau. Ferner werden Injektionsanker eingesetzt im Tunnelbau zur Verankerung der Tunnel-Innenschalen, zur Streckensohlenverfestigung und zur Vernadelung des Hangendes im Bergbau. Solche Injektionsanker sind beispielsweise durch die CH-PS 509 515, und die DE-OSen 2 315 859 und 2 412 667 bekannt. Die Injektionsanker haben sich im allgemeinen bewährt, jedoch hat sich verschiedentlich gezeigt, dass Injektionsanker bei hohen, anhaltenden Zugbelastungen sich aus ihrer Verankerung lösen und sogar plötzlich herausschiessen können.

Durch die BE-A-829 104 ist ein Gebirgsanker in Form eines rohrförmigen, am Einsteckende geschlossenen Mantels bekannt, der im Gebirge einzementiert wird. An seinem Einsteckende weist der Boden des Mantels eine Gewindebohrung auf, in die ein zentraler Schaft einschraubbar ist, der mit einem Gewinde-Endabschnitt aus dem freien, vorderen Ende des Mantels herausragt. Der Gebirgsanker dient zur Festspannung einer am Gebirge anliegenden Platte, die vom Schaft durchsetzt wird und mittels einer auf den äusseren Gewindeabschnitt des Schaftes aufgeschraubten Mutter nachträglich gegen das freie Ende des rohrförmigen Mantels festgespannt wird.

Der Erfindung liegt die Aufgabe zugrunde, einen Injektionsanker zu schaffen, dessen Verankerung auch andauernden, höchsten Zugbelastungen standzuhalten vermag.

Zur Lösung dieser Aufgabe ist erfindungsgemäss vorgesehen, dass auch das andere Ende des Mantels mit dem Schaft verbunden ist und dass Schaft und Mantel entgegengesetzt vorgespannt sind. Wie umfangreiche Ausziehversuche gezeigt haben, weisen vorgespannte Injektionsanker gegenüber nicht vorgespannten und auch gegenüber lediglich vorgereckten Injektionsankern eine erheblich höhere Ausziehfestigkeit auf. Hierfür ist offenbar ursächlich, dass der durch die Vorspannung verformte, d.h. teils gestauchte, teils gestreckte Injektionsanker unter der Einwirkung zusätzlicher Zugbelastungskräfte keine erkennbare weitere Verformung mehr erfährt. Ein in vorgespanntem Zustand in die Injektionsmasse eingebetteter Anker behält vielmehr auch bei zusätzlichen weiteren Zugbelastungen seine innige Verbindung mit dem injizierten Pfropfen bei und zeigt keine Tendenz mehr, sich durch Schwinden zu lockern und zu lösen.

Gemäss einer speziellen Ausführungsform kann der Erfindung zufolge vorgesehen werden, dass der Mantel zwischen einem an einem Ende des Schaftes vorgesehenen Widerlager und einer auf einem Gewindeabschnitt am anderen Ende des Schaftes aufgeschraubten Spannmutter unter Druckbelastung eingespannt ist. Das Widerlager kann hierbei ebenfalls eine auf den Schaft aufgeschraubte Mutter sein. Alternativ kann das Widerlager auch am Schaft durch Aufstauchen angeformt sein. Bei einer solchen Ausführungsform steht der äussere Mantel unter Druckbelastung und der Schaft unter Zugbelastung.

Der Erfindung zufolge kann jedoch auch vorgesehen werden, dass der Mantel unter Zugbelastung und der Schaft unter Druckbelastung steht. In einem solchen Fall wirkt eine äussere Zugbelastung der Druckvorspannung des Schaftes entgegen. Zu diesem Zweck kann der Erfindung zufolge der Mantel aus zwei ineinanderschraubbaren, den Schaft ganz oder teilweise axial zwischen sich einfassenden Mantelteilen bestehen. Hierbei ist vorteilhafterweise ein Mantelteil über einen Querbolzen mit dem Schaft verbunden und ist der andere Mantelteil als Kappe ausgebildet.

Die Vorspannung des Injektionsankers kann aber nicht nur durch die bisher beschriebenen Verschraubungen bewirkt werden, sondern es können fabrikationsmässig Schaft und Mantel innerhalb von z.B. hydraulischen Zugmaschinen in unterschiedlichen Spannungszuständen zusammengebaut werden, beispielsweise mittels durch den Mantel und den Schaft hindurchgesteckter Querbolzen. Ebenfalls ist es auch möglich, Mantel und Schaft bei unterschiedlichen Erwärmungstemperaturen mittels Querbolzen oder vgl. zusammenzubauen, so dass nach Abkühlung der Gesamtanker vorgespannt ist. Auf diese Weise kann der Injektionsanker nach der Erfindung mit einem auf Zug oder auch mit einem auf Druck vorgespannten Schaft, bzw. Mantel, hergestellt werden.

In weiterer Ausgestaltung der Erfindung kann vorgesehen werden, dass zwischen Mantel und Schaft ein beidendig offener Injektionskanal vorgesehen ist. Da im allgemeinen bei einem Injektionsanker ein Einspritzkanal und ein Entlüftungskanal vorgesehen sind, ist der Erfindung zufolge somit der Mantel zur Ausbildung eines dieser beiden Kanäle ausgenutzt.

Nach weiteren Merkmalen der Erfindung ist der Mantel an seiner Oberfläche durch Beulen, Sikken, Einbuchtungen oder dgl. strukturiert. Durch diese Oberflächenrauhigkeit wird ein Formschluss zwischen Anker und Mörtelpfropfen sichergestellt und die Ausziehfestigkeit des Ankers erhöht.

Injektionsanker werden vielfach in Längen von mehreren Metern benötigt, z.B. beim Abhängen von Tunnel-Innenschalen in verhältnismässig lokkerem Gestein oder bei einer Vernadelung von Gebäudewänden innerhalb der Wandebene. Der Erfindung zufolge wird deshalb zweckmässigerweise der Mantel aus einer Vielzahl abwechselnd aufeinander folgender Hülsen und Scheiben aufgebaut, so dass der Mantel als ein aus nur zwei verschiedenen Teilen aufgebauter Bausatz vorgefertigt werden kann. Die Aufeinanderfolge von dünneren Hülsen und im Durchmesser grösseren Scheiben erbringt eine im Hinblick auf die Ausziehfestigkeit günstige Oberflächenstruktur.

Gemäss einer speziellen Ausführungsform kann ferner vorgesehen werden, dass der Schaft an beiden Enden jeweils ein Abschlussstück trägt, an welchem ein den Mantel umschliessender Schlauch befestigt ist, und dass die Abschlussstücke jeweils einen Durchtrittskanal und die Scheiben an ihrem Rand Durchtrittslöcher oder -ausnehmungen für die Injektionsmasse aufweisen. Bei diesem Ausführungsbeispiel wird die Injektionsmasse zwischen Schlauch und Mantel eingedrückt, die dann am hinteren Abschlussstück in das nach hinten abgeschlossene Bohrloch eindringt und das Bohrloch bis zur vorderen Öffnung hin nach und nach ausfüllt. Auf den Abschlussstücken kann ein zweiter, den ersten Schlauch und den Austrittskanal des hinteren Abschlussstückes umschliessender zweiter, elastischer Schlauch festgespannt sein, der sich an die Bohrlochlaibung anlegt und grössere Spalträume im Untergrund zur Vermeidung von Verlusten an Injektionsmasse abschliesst.

Nach einem weiteren Merkmal der Erfindung kann vorgesehen werden, dass der Schaft exzentrisch im Mantel liegt. Zur Sicherung einer solchen Lage können Scheiben verwendet werden, die an ihren Stirnseiten mit Ringnuten versehen sind, in die die Mantelteile einsteckbar sind und die exzentrisch zu den Durchgangsbohrungen für den Schaft liegen. Ein solcher Injektionsanker, dessen Schaft als Zugglied vorgespannt ist, kann von der, der Mittelachse des Mantels abgewandten Seite her mit hohen Kräften belastet werden, da die nunmehr zum grösseren Teil unterhalb des Schaftes liegenden Mantelzone es erlaubt, grosse Lasten abzutragen.

Der Erfindung zufolge kann ferner vorgesehen werden, dass die vordere Abschlussscheibe des Ankers an ihrer Rückseite auslenkbare Arme zur Vorfixierung des Ankers im Bohrloch besitzt, wobei die auslenkbaren Arme, Federzungen oder mittels einer Verstellschraube verschwenkbare Krampen sein können. Eine solche Vorfixierbarkeit des Ankers erleichtert das Arbeiten und gewährleistet eine konzentrische Anordnung des Ankers im Bohrloch.

Schliesslich kann der Erfindung zufolge noch eine auf dem freien Ende des Schaftes befestigbare, die Bohrlochöffnung überdeckende und mit Injektionsmasse ausspritzbare Glocke vorgesehen werden. Eine solche Glocke ermöglicht es zum einen, auch die im Bereich der Bohrlochöffnung liegenden Teile des Injektionsankers einzubetten und damit vor Korrosion zu schützen. Zum anderen erlaubt die Glocke eine grossflächige Krafteinleitung in die das Bohrloch umgebende Frontseite des Mauerwerks oder dgl.

Der Injektionsanker nach der Erfindung wird im folgenden anhand mehrerer in der Zeichnung dargestellter Ausführungsbeispiele näher beschrieben.

In der Zeichnung zeigen:

Figur 1 einen Injektionsanker mit unter Zug-Vorspannung stehendem Schaft,

Figur 2 eine abgewandelte Ausführungsform des Schaftes des Injektionsankers,

Figur 3 einen Injektionsanker, dessen Schaft unter Druck-Vorspannung steht,

Figur 4 ein weiteres Ausführungsbeispiel eines vorgespannten Injektionsankers,

Figur 5 ein weiteres Ausführungsbeispiel eines vorgespannten Injektionsankers,

Figur 6 einen Injektionsanker, bei dem Schaft und Mantel exzentrisch liegen,

Figur 7 in Stirnansicht eine Distanzscheibe nach Fig. 6,

Figur 8 einen Injektionsanker mit Federzungen zur Vorfixierung und

Figur 9 einen Injektionsanker mit verstellbaren Krampen zur Vorfixierung und mit einer Abdeckglocke.

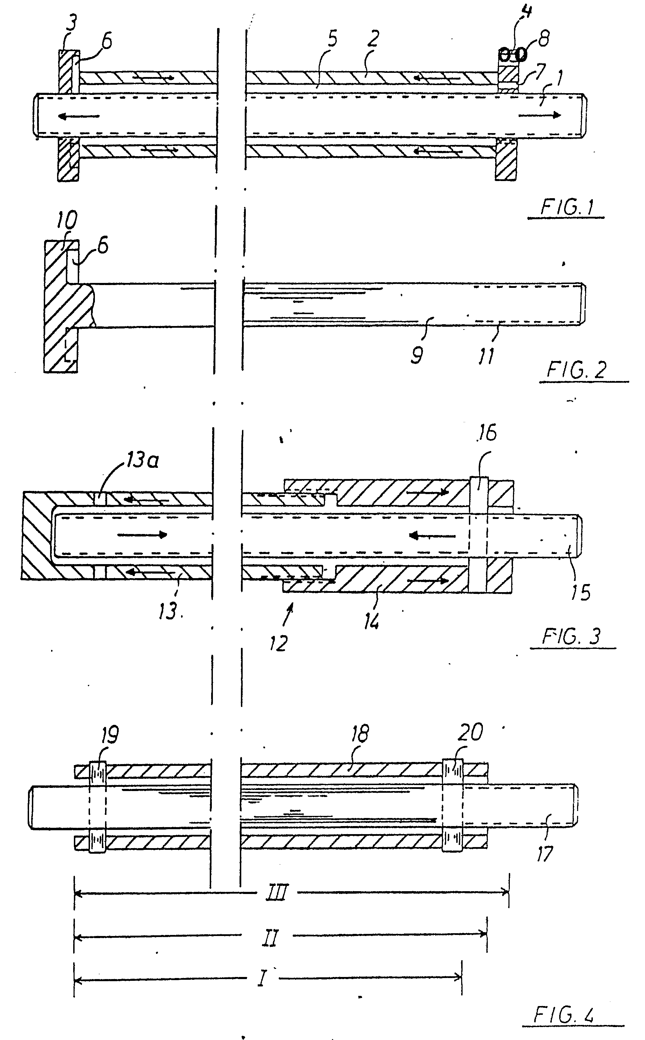

Der Injektionsanker nach Fig. 1 besteht aus einem massiven Gewindeschaft 1, der auf dem grössten Teil seiner Länge von einem rohrförmigen Mantel 2 umschlossen ist, der zwischen einem Widerlager 3 und einer auf den Schaft 1 aufgeschraubten Spannmutter 4 mit hoher Druck-Vorspannung eingefasst ist. Entsprechend ist der Schaft 1 mit einer Zug-Vorspannung versehen. Der Mantel 2 umschliesst den Schaft 1 mit einem deutlichen Spiel. Dieser Zwischenraum 5 stellt beim Ausführungsbeispiel einen Entlüftungskanal dar, welcher über in der benachbarten Stirnfläche des Widerlagers 3 vorgesehene Schlitze 6 mit dem angrenzenden Bohrlochraum und mit Entlüftungsöffnungen 7 in der Spannmutter 4 in Verbindung steht. In dem, den Mantel 2 überragenden Randbereich der Spannmutter 4 ist eine Einspritzöffnung 8 für Injektionsmasse vorgesehen. Alle Teile 1, 2, 3, 4 des Injektionsankers bestehen aus hochbelastbarem Stahl.

Während beim Ausführungsbeispiel nach Fig. 1 das Widerlager 3 ebenfalls aus einer auf den Schaft 1 aufgeschraubten Spannmutter besteht, zeigt Fig. 2 einen Schaft 9, an dessen hinteres Ende ein Widerlager 10 angeschmiedet ist. Der Schaft 9 ist hier nur in seinem vorderen Bereich mit einem Gewindeabschnitt 11 zum Aufschrauben der Mutter 4 versehen.

Beim Ausführungsbeispiel nach Fig. 3 besteht der Mantel 12 aus einem kappenförmigen Teil 13 und einem rohrförmigen Teil 14, die an ihren benachbarten Enden ineinandergeschraubt sind. Das rohrförmige Teil 14 ist nahe dem vorderen Ende des Schaftes 15 durch einen Querbolzen 16 verdrehungs- und verschiebefest auf dem Schaft angeordnet. Bei einem Einschrauben der Kappe 13 in das rohrförmige Teil 14 drückt der Kappenboden auf das hintere Ende des Schaftes 15 und wird der Schaft 15 mit einer Druck-Vorspannung versehen werden. Die Kappe 13 ist nahe ihres Bodens mit Durchtrittslöchern 13a für die Injektionsmasse versehen.

Fig. 4 zeigt einen vorgespannten Injektionsanker aus Schaft 17, Mantel 18 und zwei, jeweils an den Mantelenden vorgesehenen Querbolzen 19, 20. Der Schaft 17 und der Mantel 18 sind mit unterschiedlicher Vorspannung oder mit unterschiedlichen Temperaturen zusammengebaut. Beispielsweise kann der Mantel 18 von einer kalten Länge I aus aufgeheizt worden sein zu einer Überlänge III und in diesem Zustand auf den Schaft 17 geschoben sein, wonach zunächst der Widerlager-Querbolzen 19 durch die beiden Teile gesteckt wird. Anschliessend wird der Querbolzen 20 durch eines der beiden mantelseitigen Löcher hindurchgesteckt und auf den Schaft 17 aufgesetzt. Sobald der Mantel bei seiner Abkühlung die Länge II erreicht hat, in der die Löcher des Mantels 18 mit der Diametralbohrung des Schaftes 17 fluchten, wird der Querbolzen 20 voll eingesteckt. Beim weiteren Abkühlen tritt folglich im Mantel 18 eine hohe Zugsspannung und im Schaft 17 die entsprechend hohe Druckspannung auf. Baut man einen heissen Schaft in einen kalten Mantel 18 ein, erhält man bei entsprechender Anordnung der Querbohrungen einen Injektionsanker, bei dem die Zug-Druckvorspannung von Schaft und Mantel umgekehrt sind.

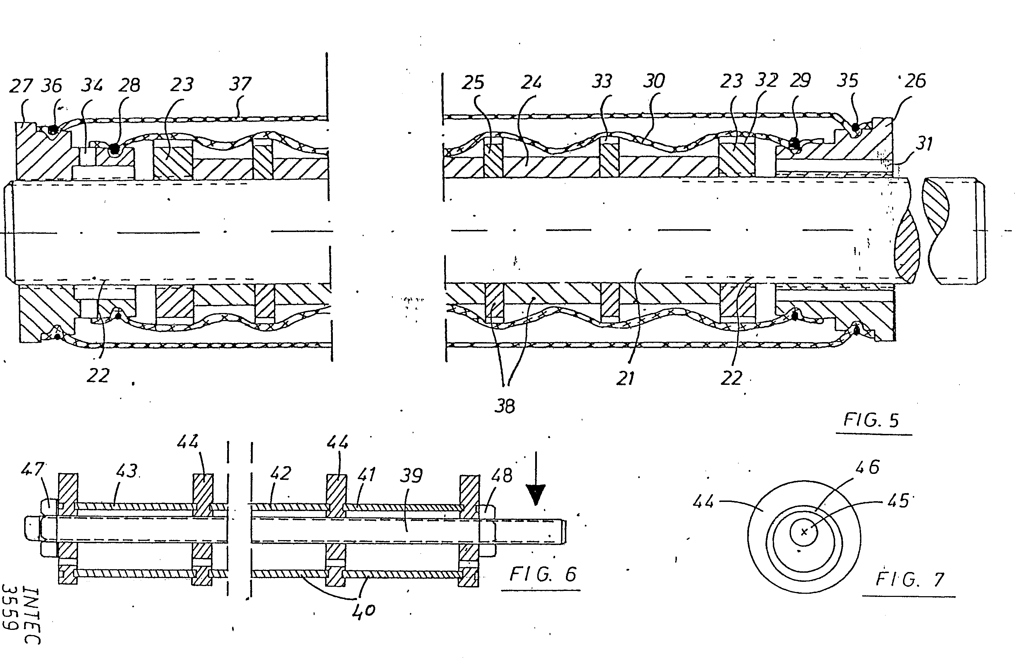

Fig. 5 zeigt ein Ausführungsbeispiel, bei welchem der Schaft 21 des Gewindeankers an beiden Enden je einen Gewindeabschnitt 22, zum Aufschrauben von Spannmuttern 23 aufweist. Zwischen den Spannmuttern 23 sind eine Vielzahl aufeinanderfolgender Hülsen 24 und Scheiben 25 eingespannt, die aufgrund ihres unterschiedlichen Aussendurchmessers dem Injektionsanker eine grobe Oberflächenstruktur verleihen. Auf die Gewindeabschnitte 22 sind ferner ein vorderes Abschlussstück 26 und ein hinteres Abschlussstück 27 aufgeschraubt, die jeweils drei im Durchmesser abgesetzte Stufen aufweisen. An den innenliegenden Abschnitten geringsten Durchmessers ist mittels Ringen 28, 29 ein flexibler Schlauch 30 festgespannt, welcher den von den Teilen 23, 24, 25 gebildeten Mantel des Injektionsankers umschliesst. Im vorderen Abschlussstück 26 ist ein axialer Einspritzkanal 31 ausgebildet, der in einen freien Raum unterhalb des Schlauches 30 mündet. Die Spannmuttern 23 und die Scheiben 24 sind am Umfang jeweils mit Durchtrittsausnehmungen 32, 33 für die Injektionsmasse versehen, welche zunächst bis zum hinteren Abschlussstück 27 geleitet wird, wo sie durch einen Umlenkkanal 34 an die Aussenseite des Schlauches 30 und damit – bei eingesetztem Anker – in das Bohrloch austritt. Auf der mittleren Stufe der Abschlussstücke 26, 27 ist mittels der Ringe 35, 36 ein weiterer elastischer Schlauch 37 festgespannt, der durch den Druck der Injektionsmasse an die Bohrlochwandung angepresst wird und Spalträume oder dgl. im Untergrund abdeckt.

Die Erfindung ist nicht auf die dargestellten Ausführungsbeispiele beschränkt. Vielmehr können beim Ausführungsbeispiel nach Fig. 5 auch abweichend zwischen dem von den Teilen 23, 24, 25 gebildeten Mantel 38 und dem Schaft 21 ein Injektionskanal vergleichbar dem Raum 5 in Fig. 1 sowie Durchtrittslöcher in den Spannmuttern 23 vorgesehen werden. In einem solchen Fall werden die Abschlussstücke 26, 27 bis unmittelbar an die Spannmuttern 23 herangesetzt und kann der Schlauch 30 entfallen.

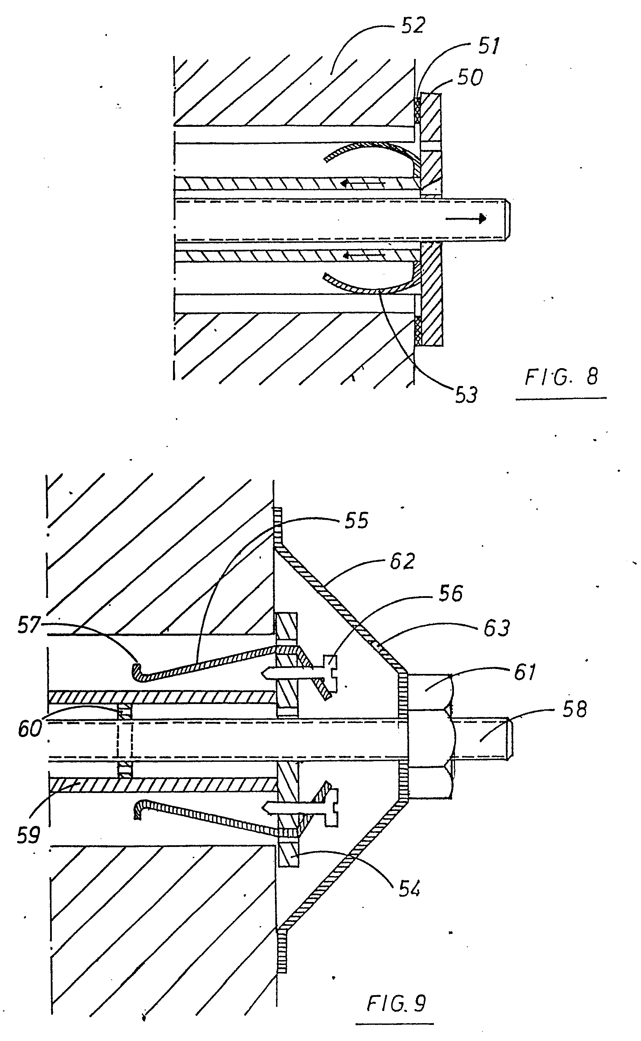

Die Figuren 6 und 7 zeigen einen Injektionsanker, bei welchem der Schaft 39 exzentrisch zum Mantel 40 liegt, der hier aus mehreren Mantelteilen 41, 42, 43 und dazwischenliegenden Distanzierungsscheiben 44 besteht. Die Distanzierungsscheiben 44 besitzen ein zentrisches Loch 45 zur Durchführung des Schaftes 39 und sind an ihren beiden Stirnseiten mit exzentrisch liegenden Ringnuten 46 versehen, in welche die Mantelteile 41, 42, 43 einsteckbar sind. Der Anker ist mittels der Muttern 47, 48 vorspannbar bzw. vorgespannt. Der Anker nach Fig. 6 ist zum Abfangen hoher senkrechter Lasten besonders geeignet. Der Anker wird hierbei in der in Fig. 6 gezeigten Weise eingebaut, bei der also die abzufangende Kraft P von der der Mittelachse des Mantels abgewandten Seite her am Schaft 39 angreift.

Fig. 8 zeigt die vordere Hälfte eines Inkjektionsankers etwa nach Fig. 1, wobei aber hier dem Anker eine grosse, das Bohrloch abdeckende Abschlussscheibe 50 zugeordnet ist, die über einen beispielsweise aufgeklebten Dichtring 51 an die vordere Front des Untergrundes 52 andrückbar ist. An der Rückseite der Platte 50 sind mehrere über den Umfang verteilte Federzungen 53 befestigt, z.B. angeschweisst, die eine Vorfixierung des Injektionsankers im Bohrloch ermöglichen.

Beim Ausführungsbeispiel nach Fig. 9 sind in der vorderen Abschlussplatte 54 Krampen 55 gelenkig gelagert, welche mittels Verstellschrauben 56 mit ihren innenliegenden Krallenenden 57 gegen die Bohrlochwandung abgedrückt werden können. Zur Sicherung des Abstandes zwischen Schaft 58 und Mantel 59 dienen hier auf dem Gewindeschaft aufgeschraubte Distanzringe 60, über die der Mantel 59 geschoben ist. Die Distanzringe 60 sind mit Löchern zum Durchtritt der Injektionsmasse versehen.

Dem Injektionsanker nach Fig. 9 ist ferner noch eine auf das vordere Schaftende aufsetzbare und mittels einer Mutter 61 gegen den Untergrund anspannbare Glocke 62 zugeordnet, die mit einem Injektionsloch 63 versehen ist. Nach Injizierung des Ankers im Untergrund wird diese Glocke auf dem Schaft befestigt und dann auch ihrerseits angespritzt, wonach alle Teile des Injektionsankers korrosionssicher in der Injektionsmasse eingebettet sind und auch der Bohrlochrandbereich gleichmässig zur Krafteinleitung ausgenutzt werden kann.

## Patentansprüche

1. In vorgebohrte Löcher einzusetzender Injektionsanker mit einem zentralen Schaft, der von einem rohrförmigen Mantel (2) umschlossen ist, welcher an einem Ende mit dem Schaft verbunden ist, dadurch gekennzeichnet, dass auch das andere Ende des Mantels (2) mit dem Schaft (1) verbunden ist und dass Schaft (1) und Mantel (2) entgegengesetzt vorgespannt sind.

2. Injektionsanker nach Anspruch 1, dadurch gekennzeichnet, dass der Mantel (2) zwischen einem an einem Ende des Schaftes (1, 9) vorgesehenen Widerlager (3, 10) und einer auf einen Gewindeabschnitt am anderen Ende des Schaftes aufgeschraubten Spannmutter (4) unter Druckbelastung eingespannt ist.

3. Injektionsanker nach Anspruch 2, dadurch gekennzeichnet, dass das Widerlager (3) eine auf den Schaft (1) aufgeschraubte Mutter ist.

4. Injektionsanker nach Anspruch 2, dadurch gekennzeichnet, dass das Widerlager (10) am Schaft (9) angeformt ist.

5. Injektionsanker nach Anspruch 1, dadurch gekennzeichnet, dass der Mantel (12) aus zwei ineinanderschraubbaren, den Schaft (15) ganz oder teilweise axial zwischen sich einfassenden Mantelteilen (13, 14) besteht.

6. Injektionsanker nach Anspruch 5, dadurch gekennzeichnet, dass ein Mantelteil (14) durch einen Querbolzen (16) mit dem Schaft (15) verbunden ist und dass der andere Mantelteil als Kappe (13) ausgebildet ist.

7. Injektionsanker nach Anspruch 1, dadurch gekennzeichnet, dass der Mantel (18) und der Schaft (17) durch thermische Aufschrumpfung vorgespannt sind.

8. Injektionsanker nach Anspruch 7, dadurch gekennzeichnet, dass der Mantel (18) an beiden Enden durch Querbolzen (19, 20) mit dem Schaft (17) verbunden ist.

9. Injektionsanker nach Anspruch 7, dadurch gekennzeichnet, dass der Mantel zwischen einem angeformten oder aufgeschraubten schaftseitigen Widerlager (3, 10) und einem Querbolzen unter Druckspannung eingespannt ist.

10. Injektionsanker nach einem oder mehreren der Ansprüche 1 bis 9, dadurch gekennzeichnet, dass zwischen Mantel (2) und Schaft (1) ein offener Injektionskanal (5) vorgesehen ist.

11. Injektionsanker nach einem oder mehreren der Ansprüche 1 bis 9, dadurch gekennzeichnet, dass der Mantel an seiner Oberfläche durch Beulen, Sicken, Umfangsrillen oder Einbuchtungen oder dgl. strukturiert ist.

12. Injektionsanker nach den Ansprüchen 1 und 2, dadurch gekennzeichnet, dass der Mantel (38) aus einer Vielzahl abwechselnd aufeinanderfolgender Hülsen (24) und Scheiben (25) besteht.

13. Injektionsanker nach Anspruch 12, dadurch gekennzeichnet, dass der Schaft (21) an beiden Enden jeweils ein Abschlussstück (26, 27) trägt, an welchem ein den Mantel umschliessender Schlauch (30) befestigt ist, und dass die Abschlussstücke (26, 27) jeweils einen Kanal (31, 34) und die Scheiben (25) an ihrem Rand Durchtrittslöcher oder Durchtrittsausnehmungen (32, 33) für die Injektionsmasse aufweisen.

14. Injektionsanker nach Anspruch 13, dadurch gekennzeichnet, dass auf den Abschlussstücken (26, 27) ein zweiter, den ersten Schlauch (30) und den Durchgangskanal (34) des hinteren Abschlussstückes (27) umschliessender zweiter Schlauch (37) festgespannt ist.

15. Injektionsanker nach Anspruch 1, dadurch gekennzeichnet, dass der Schaft (39) exzentrisch im Mantel (40) liegt.

16. Injektionsanker nach den Ansprüchen 12 und 15, dadurch gekennzeichnet, dass die Scheiben (44) an ihren Stirnseiten mit Ringnuten (46) versehen sind, in die die Mantelteile (41, 42, 43) einsteckbar sind und die exzentrisch zu den Durchgangsbohrungen (45) für den Schaft (39) liegen.

17. Injektionsanker, insbesondere nach Anspruch 1, dadurch gekennzeichnet, dass die vordere Bohrlochabschlussscheibe (50 oder 54) des Ankers an ihrer Rückseite auslenkbare Arme zur Vorfixierung des Ankers im Bohrloch besitzt.

18. Injektionsanker nach Anspruch 17, dadurch gekennzeichnet, dass die auslenkbaren Arme Federzungen (53) oder mittels einer Verstellschraube (56) verschwenkbare Krampen (55) sind.

19. Injektionsanker, insbesondere nach Anspruch 1, gekennzeichnet durch eine auf dem freien Ende des Schaftes (58) befestigbare, die Bohrlochöffnung überdeckende und mit Injektionsmasse ausspritzbare Glocke (62).

**Claims**

1. Injection anchor to be inserted in pre-drilled holes with a central shaft enclosed in a tubular casing (2), which is connected with the shaft at one end, characterized in that the other end of the casing (2) is also connected with the shaft (1) and that shaft (1) and casing (2) are pre-stressed in opposing directions.

2. Injection anchor according to claim 1 characterized in that the casing (2) is fixed under pressure load between an abutment (3, 10) provided at one end of the shaft (1, 9) and a tensioning nut (4) screwed onto a section of the thread at the other end of the shaft.

3. Injection anchor according to claim 2 characterized in that the abutment (3) is a nut screwed onto the shaft (1).

4. Injection anchor according to claim 2 characterized in that the abutment (10) is constructed so as to form part of the shaft (9).

5. Injection anchor according to claim 1 characterized in that the casing (12) consists of two casing parts (13, 14) which can be screwed into each other and that totally or partially enclose the shaft (15) axially between them

6. Injection anchor according to claim 5 characterized in that one of the casing parts (14) is connected with the shaft (15) by a transverse bolt (16) and that the other casing part is formed as a cap (13).

7. Injection anchor according to claim 1 characterized in that the casing (18) and the shaft (17) are pre-stressed by thermal shrinking.

8. Injection anchor according to claim 7 characterized in that the casing (18) is connected to the shaft (17) at both ends by transverse bolts (19, 20).

9. Injection anchor according to claim 7 characterised in that the casing is fitted under pressure load between a moulded or screwed-on abutment (3, 10) on the shaft side and a transverse bolt.

10. Injection anchor according to one or several of claims 1 to 9 characterized in that an open injection canal (5) is provided between casing (2) and shaft (1).

11. Injection anchor according to one or several of claims 1 to 9 characterized in that the surface structure of the casing consists of indentations, crimps, peripheral grooves or notches or the like.

12. Injection anchor according to claims 1 and 2 characterized in that the casing (38) consists of a multiplicity of alternating bushes (24) and disks (25).

13. Injection anchor according to claim 12 characterized in that the shaft (21) has an endpiece (26, 27) at each end to which a hose (30) enclosing the casing is attached and that the endpieces (26, 27) each have a canal (31, 34) and the disks at their peripheries have passage holes or passage recesses (32, 33) for the injection substance.

14. Injection anchor according to claim 13 characterized in that a second hose (37) is tightly fixed to the endpieces (26, 27) enclosing the first hose (30) and the canal passage (34) of the rear endpiece (27).

15. Injection anchor according to claim 1 characterized in that the shaft (39) lies eccentrically in the casing (40).

16. Injection anchor according to claims 12 and 15 characterized in that the disks (44) are fitted frontally with snap ring grooves (46) into which the casing parts (41, 42, 43) can be inserted and which are positioned eccentrically to the boreholes (45) for the shaft (39).

17. Injection anchor in particular according to claim 1 characterized in that the front drill hole end disk (50 or 54) of the anchor has arms on its rear side that swivel out to facilitate pre-fixing of the anchor in the borehole.

18. Injection anchor according to claim 17 characterized in that the arms that swivel out are spring tongues (53) or cramps (55) that can be swivelled by means of an adjuster screw.

19. Injection anchor in particular according to claim 1 characterized by a bell (62) that can be fitted to the free end of the shaft (58), that convers over the borehole openings and that can be filled with injection substance.

**Revendications**

1. Cheville à injection, à introduire dans des trous préforés, munie d'une tige centrale, entourée d'un manchon tubulaire (2), qui est relié, à une extrémité, à la tige, caractérisée par le fait que l'autre extrémité du manchon (2) est également reliée à la tige (1) et que la tige (1) et l'enveloppe (2) sont précontraints en sens opposés.

2. Cheville à injection selon la revendication 1, caractérisée par le fait que le manchon (2) est serré, sous charge de compression, entre une butée (3, 10), prévue à une extrémité de la tige (1, 9) et un écrou de serrage (4) vissé sur une portion de filetage sur l'autre extrémité de la tige.

3. Cheville à injection selon la revendication 2, caractérisée par le fait que la butée (3) est un écrou vissé sur la tige (1).

4. Cheville à injection selon la revendication 2, caractérisée par le fait que la butée (10) est formée sur la tige (9).

5. Cheville à injection selon la revendication 1, caractérisée par le fait que le manchon (12) est constitué par deux parties de manchon (13, 14) vissables l'une dans l'autre et entourant la tige (15) entre elles, axialement, totalement ou partiellement.

6. Cheville à injection selon la revendication 5, caractérisée par le fait qu'une partie de manchon (14) est reliée à la tige (15) par un boulon transversal (16) et l'autre partie du manchon est en forme de chapeau (13).

7. Cheville à injection selon la revendication 1, caractérisée par le fait que le manchon (18) et la tige (17) sont précontraints par frettage thermique.

8. Cheville à injection selon la revendication 7, caractérisée par le fait que le manchon (18) est relié à la tige (17) à ses deux extrémités par des boulons transversaux (19, 20).

9. Cheville à injection selon la revendication 7, caractérisée par le fait que le manchon est serré, sous compression, entre une butée (3, 10), formée ou vissée sur la tige, et un boulon transversal.

10. Cheville à injection selon l'une des revendications 1 à 9, caractérisée par le fait qu'un canal d'injection (5) est prévu entre manchon (2) et tige (1).

11. Cheville à injection selon l'une des revendications 1 à 9, caractérisée par le fait que le manchon est structuré, à sa surface, par des bosses, sciages, rainures périphériques ou dentelures.

12. Cheville à injection selon les revendications 1 et 2, caractérisée par le fait que le manchon (38) est constitué par une pluralité de douilles (24) et disques (25) se succèdant alternativement.

13. Cheville à injection selon la revendication 12, caractérisée par le fait que la tige (21) porte à chaque extrémité une pièce de fermeture (26, 27), à laquelle est fixé un tuyau (30) flexible, entourant le manchon, et les pièces de fermeture (26, 27) présentent chacune un canal (31, 34) et les disques (25), des trous ou des évidements de passage sur leur bord, pour la masse d'injection.

14. Cheville à injection selon la revendication 13, caractérisée par le fait que, sur les pièces de fermeture (26, 27) est tendu un deuxième tuyau (37) entourant le premier tuyau (30) et le canal de passage (34) de la pièce de fermeture arrière (27).

15. Cheville à injection selon la revendication 1, caractérisée par le fait que la tige (39) est placée excentrée dans le manchon (40).

16. Cheville à injection selon les revendications 12 et 15, caractérisée par le fait que les disques (44) sont munis, sur leur face frontale, de gorges annulaires (46) dans lesquelles les parties de manchon (41, 42, 43) peuvent être inserrées et qui se trouvent excentrées par rapport aux trous de passage (45) pour l'arbre (39).

17. Cheville à injection, en particulier selon la revendication 1, caractérisée par le fait que le disque avant de la cheville (50, 54), destiné à la fermeture du trou préforé, possède sur sa face arrière des bras rabattables pour la préfixation de la cheville dans le trou foré.

18. Cheville à injection selon la revendication 17, caractérisée par le fait que les bras rabattables sont des languettes élastiques (53) ou des pattes (55) qu'on peut faire pivoter par des vis de réglage (56).

19. Cheville à injection, en particulier selon la revendication 1, caractérisée par une cloche (62) recouvrant l'orifice du trou préforé et injectable par la masse d'injection et qui est fixable sur l'extrémité libre de la tige (58).

3   6

5   2

4   8
7   1

FIG.1

10   6

9   11

FIG. 2

13a   16

13   12   14   15

FIG. 3

19   18   20

17

III

II

I

FIG. 4

FIG. 5

FIG. 6

FIG. 7

0 089 656

INTEC
3559

FIG. 8

FIG. 9